# EUROPEAN PATENT APPLICATION

(11) **EP 4 365 495 A1**
(43) Date of publication of application: **08.05.2024**
(21) Application number: 23797625.3
(22) Date of filing: 04.01.2023
(51) Int. Cl.: F24C 15/20, B01D 46/12

(54) **FILTERING DEVICE AND COMBINED STOVE**

(30) Priority: 16.09.2022 CN 202211129680
(71) Applicant: Wuhu Midea Smart Kitchen Appliance Manufacturing Co., Ltd., Wuhu, Anhui 241000 (CN)
(72) Inventor: ZOU, Yihua, Wuhu, Anhui 241000 (CN); ZHANG, Wangao, Wuhu, Anhui 241000 (CN); OUYANG, Weiming, Wuhu, Anhui 241000 (CN)
(74) Representative: Whitlock, Holly Elizabeth Ann
(86) International application number: PCT/CN2023/070497
(87) International publication number: WO 2024/055488

(57) **Abstract**

Provided are a filtration device and a combination stove. The filtration device includes a mounting frame and a handle. The mounting frame is provided with a filtration mesh. The handle is movably connected to the mounting frame and has a storage state and a deployed state.

## Description

### CROSS-REFERENCE TO RELATED APPLICATION

This application claims priority to Chinese Patent Application No. 202211129680.8 filed on September 16, 2022 and entitled "FILTRATION DEVICE AND COMBINATION STOVE", the entire disclosure of which is incorporated herein by reference.

### FIELD

The present disclosure relates to the technical field of kitchen appliances, and more particularly, to a filtration device and a combination stove.

### BACKGROUND

A combination stove is a combination electric appliance having stove and range hood functions. In the course of its operation, the combination stove needs to draw and discharge oil fumes. Therefore, the filtration device is required to intercept the oil fumes and water vapor. The filtration device needs to be cleaned after being used for a period of time.

### SUMMARY

The present disclosure aims to at least partially solve the technical problems in the related art. To this end, the present disclosure provides a filtration device. The filtration device is designed to be easily grasped by a user.

To achieve the above purpose, the present disclosure discloses a combination stove. The filtration device includes a mounting frame provided with a filtration mesh, and a handle movably connected to the mounting frame and has a storage state and a deployed state.

In some embodiments of the present disclosure, the handle is movable in a direction of gravity to be in the storage state, and is movable in a direction opposite to the direction of gravity to be in the deployed state.

In some embodiments of the present disclosure, the handle includes a gripping portion. When the handle is in the storage state, a distance between the gripping portion and the mounting frame along a height direction of the filtration device is defined as h1, and when the handle is in the deployed state, a distance between the gripping portion and the mounting frame along the height direction of the filtration device is defined as h2, where h2 is greater than h1.

In some embodiments of the present disclosure, the handle includes a gripping portion and a slidable portion. The slidable portion is slidably connected to the mounting frame to allow the handle to be in the storage state or the deployed state.

In some embodiments of the present disclosure, the slidable portion is disposed at each of two ends of the gripping portion along a longitudinal direction of the gripping portion.

In some embodiments of the present disclosure, one of the mounting frame and the slidable portion has a sliding groove, and another one of the mounting frame and the slidable portion has a sliding protrusion. The sliding protrusion is arranged into the sliding groove to allow the slidable portion to be slidably connected to the mounting frame.

In some embodiments of the present disclosure, along a height direction of the filtration device, the gripping portion is lower than an upper surface of the mounting frame when the handle is in the storage state, and/or the slidable portion is higher than a lower surface of the mounting frame when the handle is in the storage state, and/or the gripping portion is higher than the upper surface of the mounting frame when the handle is in the deployed state.

In some embodiments of the present disclosure, the gripping portion is provided with a lift portion.

In some embodiments of the present disclosure, the mounting frame has a first vent hole covered with the filtration mesh. The handle extends across the first vent hole.

In some embodiments of the present disclosure, the mounting frame is provided with two filtration meshes including a first filtration mesh and a second filtration mesh. The handle is located between the first filtration mesh and the second filtration mesh.

In some embodiments of the present disclosure, the mounting frame includes an inner wall and an outer wall. The first vent hole is enclosed by the inner wall. The handle is movably connected to the inner wall. The outer wall surrounds the inner wall to form a liquid collection groove between the inner wall and the outer wall. The filtration mesh is arranged obliquely to guide a filtered object into the liquid collection groove.

In some embodiments of the present disclosure, the filtration device is applied in a combination stove including a cover plate and a connector. The cover plate has an opening. The connector is disposed on a lower surface of the cover plate and exposed at the opening. The mounting frame is disposed at the opening, and the outer wall is supported on the connector to allow for a detachable arrangement of the mounting frame.

The present disclosure further discloses a combination stove including the filtration device as described above.

### BRIEF DESCRIPTION OF THE DRAWINGS

In order to clearly explain technical solutions of the embodiments of the present disclosure or in the related art, accompanying drawings used in the description of the embodiments or the related art are briefly described below. Obviously, the accompanying drawings as described below are merely some embodiments of the present disclosure. Based on structures illustrated in these drawings, other accompanying drawings may be obtained by those of ordinary skill in the art without creative effort.
FIG. 1 is a schematic view of a combination stove according to some embodiments.
FIG. 2 is an exploded view of a combination stove according to some embodiments.
FIG. 3 is a cross-sectional view of a combination stove in some embodiments.
FIG. 4 is an enlarged view of a part depicted by dotted lines in FIG. 3.
FIG. 5 is a cross-sectional view of a combination stove according to some embodiments.
FIG. 6 is an enlarged view of a part depicted by dotted lines in FIG. 5.
FIG. 7 is a schematic view of a cover plate according to some embodiments.
FIG. 8 is a schematic view of an assembling among a connector, a grille, and a filtration device according to some embodiments.
FIG. 9 is a schematic view of a filtration device according to some embodiments, in which a handle is in a storage state.
FIG. 10 is a schematic view of a filtration device according to some embodiments.
FIG. 11 is a schematic view of a filtration device according to some embodiments, in which a handle is in a deployed state.
FIG. 12 is a schematic partial view of a filtration device according to some embodiments, in which a handle is in a storage state.
FIG. 13 is a schematic partial view of a filtration device according to some embodiments, in which a handle is in a deployed state.
FIG. 14 is a schematic view of a handle according to some embodiments.
FIG. 15 is a front view of a filtration device according to some embodiments, in which a handle is in a storage state.
FIG. 16 is a cross-sectional view of the structure illustrated in FIG. 15.
FIG. 17 is a front view of a filtration device according to some embodiments, in which a handle is in a deployed state.
FIG. 18 is a cross-sectional view of the structure illustrated in FIG. 17.
FIG. 19 is a schematic view of a fan.

### Description of Reference Numerals:

body 1000;
cover plate 2000, opening 2100, left cooking region 2210, right cooking region 2220;
fan 3000, volute casing 3100, upper volute casing 3110, air inlet 3111, lower volute casing 3120, air outlet 3121, impeller 3400, air duct 3500;
connector 4000, first connection portion 4100, second connection portion 4200;
grille 5000;
filtration device 6000, filtration mesh 6100, first filtration mesh 6110, second filtration mesh 6120;
mounting frame 6200, liquid collection groove 6210, outer wall 6211, bottom wall 6212, inner wall 6213, sliding groove 6214, first vent hole 6220, handle 6300, gripping portion 6310, lift portion 6311, slidable portion 6320, sliding protrusion 6321.

The implementation, functional characteristics, and advantages of the present disclosure will be further described with reference to the drawings.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the scope of the present disclosure.

It should be noted that all orientation terms in the embodiments of the present disclosure (such as over, below, left, right, front, rear, or the like) are only used to explain relative positional relationships and movements between all components under a specific posture (as illustrated in the drawings). When the specific posture changes, the orientation terms also change correspondingly.

In the present disclosure, unless otherwise clearly specified and limited, terms such as "connected to", "fixed", and the like should be understood in a broad sense. For example, "fixed" may be a fixed connection or a detachable connection, or an integral connection; mechanical connection or electrical connection; direct connection or indirect connection through an intermediate; internal communication of two components or the interaction relationship between two components. For those skilled in the art, the specific meaning of the above-mentioned terms in the present disclosure can be understood according to specific circumstances.

In addition, the term such as "first" or "second" in the present disclosure is only for descriptive purposes, rather than indicating or implying relative importance or implicitly indicating the number of indicated technical features. Therefore, the features associated with "first" or "second" can explicitly or implicitly include at least one of the features. In addition, the technical solutions between various embodiments may be combined with each other, but it must be based on the premise that those skilled in the art can implement them. When the combination of the technical solutions contradicts each other or is unachievable, it should be considered that the combination of the technical solutions does not exist, nor is within the scope of the present disclosure.

A combination stove generates oil fumes during use. As a result, the combination stove needs to draw and discharge the oil fumes. Further, in addition to oil mist particles, air also contains water vapor and other harmful substances. In the related art, a filtration device may be provided on an air inlet path of the combination stove to achieve coarse filtration. When the air passes through the filtration device, some of the oil mist particles may adhere to the filtration device, and the water vapor is condensed at the filtration device when passing through the filtration device. After prolonged use, filtration property of the filtration device is weakened due to accumulation of dirt. Therefore, regular cleaning of the filtration device is necessary. To facilitate removal and mounting of the filtration device by a user, the filtration device is provided with a handle. The user may grip the handle when mounting and dismounting the filtration device, to remove the filtration device. In this case, although the handle is convenient for the user, mounting of other components of the combination stove is interfered with the handle. In order to prevent the handle from interfering with the mounting of other components, a thickness of the combination stove needs to be increased. In order to solve the above problems, the present disclosure discloses a filtration device, which will be described below in detail in combination with the combination stove.

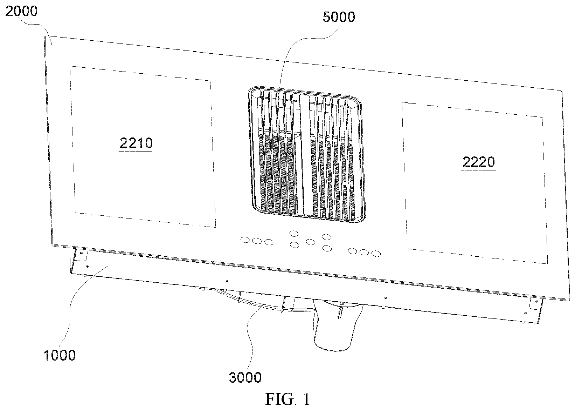

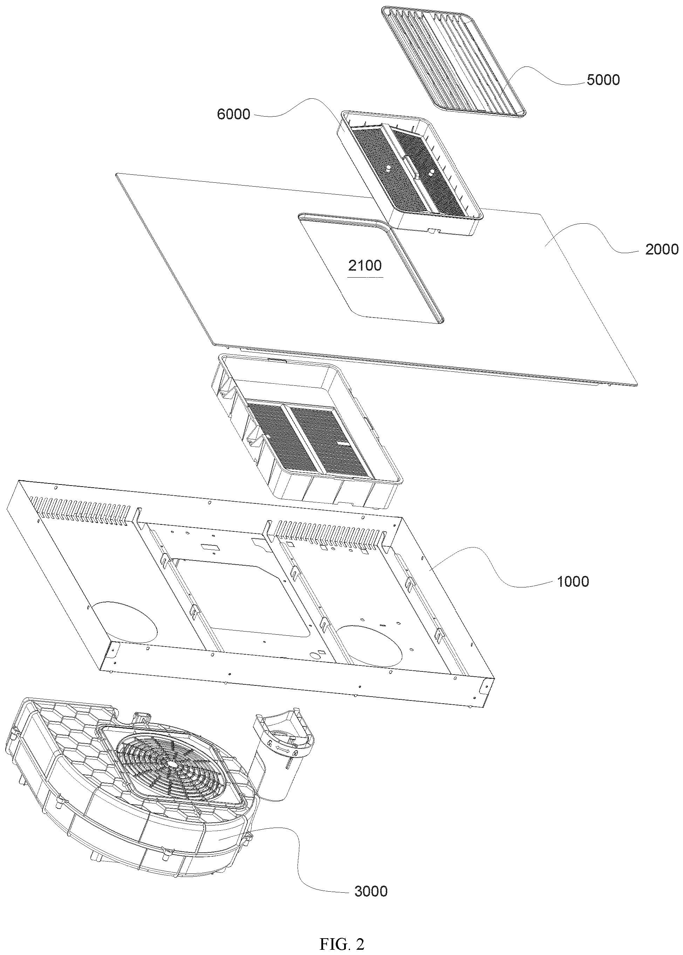

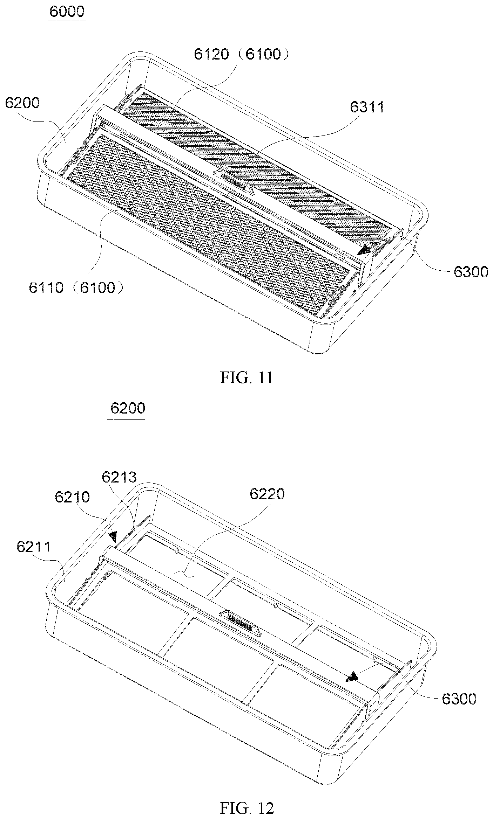

In some embodiments, as illustrated in FIG. 1 to FIG. 6 and FIG. 11 to FIG. 13, the combination stove includes a body 1000, a cover plate 2000, a fan 3000, and a filtration device 6000.

The body 1000 can provide support in the combination stove, and is configured for mounting of various components to maintain an overall configuration of the combination stove.

The cover plate 2000 is mounted at the body 1000 to form a top surface of the combination stove. When the combination stove is mounted to a cabinet, the cover plate 2000 is exposed. That is, the cover plate 2000 is visible to the user, and the body 1000 is hidden inside the cabinet. The cover plate 2000 is substantially of a flat shape. For example, the cover plate 2000 may be made of a material such as glass. An opening is formed at the cover plate 2000 and penetrates an upper surface and a lower surface of the cover plate 2000. A region located at a left side of the opening 2100 is a left cooking region 2210, and a region located at a right side of the opening 2100 is a right cooking region 2220. An electromagnetic heater is provided at a position in the body 1000 corresponding to the left cooking region 2210. Further, a further electromagnetic heater is also provided at a position in the body 1000 corresponding to the right cooking region 2220. In some embodiments, a combustor using combustible gas for combustion may also be provided.

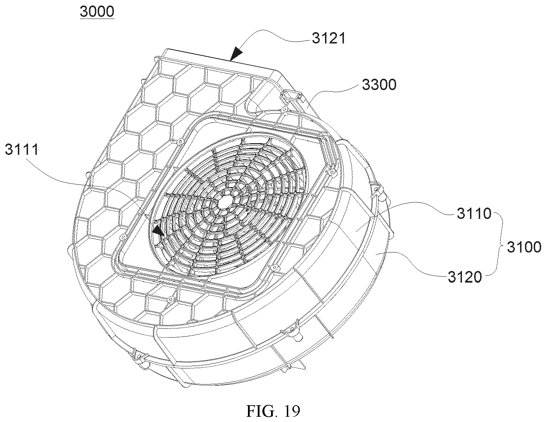

Referring to FIG. 19, the fan 3000 includes a volute casing 3100, an impeller 3400, and an electric motor. The volute casing 3100 includes a lower volute casing 3120 and an upper volute casing 3110. The electric motor is mounted at the lower volute casing 3120. The impeller 3400 is a centrifugal impeller mounted at the lower volute casing 3120, and is in a drive connection with the electric motor. The upper volute casing 3110 is connected to the lower volute casing 3120 to cover the impeller 3400. An air duct 3500 is formed between the upper volute casing 3110 and the lower volute casing 3120. The impeller 3400 is located in the air duct 3500. The upper volute casing 3110 has an air inlet 3111 in communication with the air duct 3500. An air outlet 3121 is formed between the upper volute casing 3110 and the lower volute casing 3120 and is in communication with the air duct 3500. The fan 3000 is fixed into the body 1000 through the upper volute casing 3110.

The electric motor of the fan 3000 operates to drive the impeller 3400 to rotate to generate a negative pressure. Therefore, external air enters the body 1000 from the opening 2100 of the cover plate 2000 through the pressure, then enters the air duct 3500 through the air inlet 3111, and is discharged through the air outlet 3121. Moreover, a path of air flowing from the opening 2100 of the cover plate 2000 to the air inlet 3111 of the fan 3000 may be considered as an air inlet path.

The filtration device 6000 includes a mounting frame 6200 provided with a filtration mesh 6100. The filtration device 6000 is disposed on the air inlet path. When the air flows through the filtration device 6000, the oil mist particles in the air may adhere to the filtration mesh 6100, and the water vapor in the air is condensed when passing through the filtration mesh 6100. In this case, after prolonged use, the filtration device 6000 may accumulate various dirt and debris. As a result, it is necessary to remove the filtration device 6000 for cleaning.

It can be understood that the filtration device 6000 is detachably mounted at the combination stove through the mounting frame 6200. The user may disassemble the filtration device 6000, and remove the filtration device 6000 through the opening 2100 for cleaning. After the filtration device 6000 is cleaned, the filtration device 6000 may be placed onto the air inlet path through the opening 2100.

A detachable arrangement of the mounting frame 6200 can realize a detachable arrangement of the entire filtration device 6000. When the user detaches the mounting frame 6200, since the filtration mesh 6100 is disposed at the mounting frame 6200, the filtration mesh 6100 may be removed and mounted along with the mounting frame 6200. The detachable arrangement of the mounting frame 6200 may be realized in several manners. For example, the mounting frame 6200 may be fixed on an air inlet path of the fan 3000 by means of a snap-fitting, magnetic attraction, or gravity support. The filtration mesh 6100 may be disposed at the mounting frame 6200 in various manner. For example, the filtration mesh 6100 may be threaded, snap-fitted, or bonded to the mounting frame 6200.

The mounting frame 6200 is provided with a handle 6300. The handle 6300 is movably connected to the mounting frame 6200. In this way, it is possible to allow the handle 6300 to be in a storage state or a deployed state relative to the mounting frame 6200. In the storage state, a space occupied by the handle 6300 is reduced, and the handle 6300 is attached with the mounting frame 6200 as much as possible. In this way, when the filtration device 6000 is mounted at the combination stove, the handle 6300 would not interfere with the mounting of other components. In the deployed state, the space occupied by the handle 6300 is increased, and the handle 6300 is separated from the mounting frame 6200 as much as possible. As a result, the handle 6300 is not attached with the mounting frame 6200. In this case, a gripping space is formed between the handle 6300 and the mounting frame 6200. Therefore, it is convenient for the user to access the gripping space to grip the handle 6300 due to the absence of interference from the mounting frame 6200. Therefore, the filtration device 6000 can be lifted entirely.

For example, considering a state where the combination stove is mounted at the cabinet, a grille 5000 is mounted above the filtration device 6000. When there is no need to remove the filtration device 6000 and the handle 6300 is in the storage state, the grille 5000 may be positioned as close as possible to the filtration device 6000, allowing a dimension of the combination stove in its height direction (i.e., an up-down direction when the combination stove is mounted at the cabinet) to be reduced as much as possible. Therefore, the whole combination stove may be made thinner. As a result, it is possible to reduce an occupied space inside the cabinet by the combination stove. When the filtration device 6000 needs to be disassembled, the grille 5000 is detached through the opening 2100, and then the handle 6300 is controlled to be switched from the storage state into the deployed state. Since the handle 6300 has a weight much smaller than that of the entire filtration device 6000, the user can easily switch the handle 6300 into the deployed state. When the handle 6300 is in the deployed state, the user may grip the handle 6300 to lift the filtration device 6000 out of the opening 2100.

It can be seen from the above that by designing the handle 6300 of the filtration device 6000 to be movable, the handle 6300 has the storage state and the deployed state relative to the mounting frame 6200. The space occupied by the handle 6300 can be reduced when the handle 6300 is in the storage state, and the user may grasp the handle 6300 easily when the handle 6300 is in the deployed state, Therefore, an overall thickness of the combination stove can be lowered while separating the filtration device 6000 from the combination stove by the user will not be interfered.

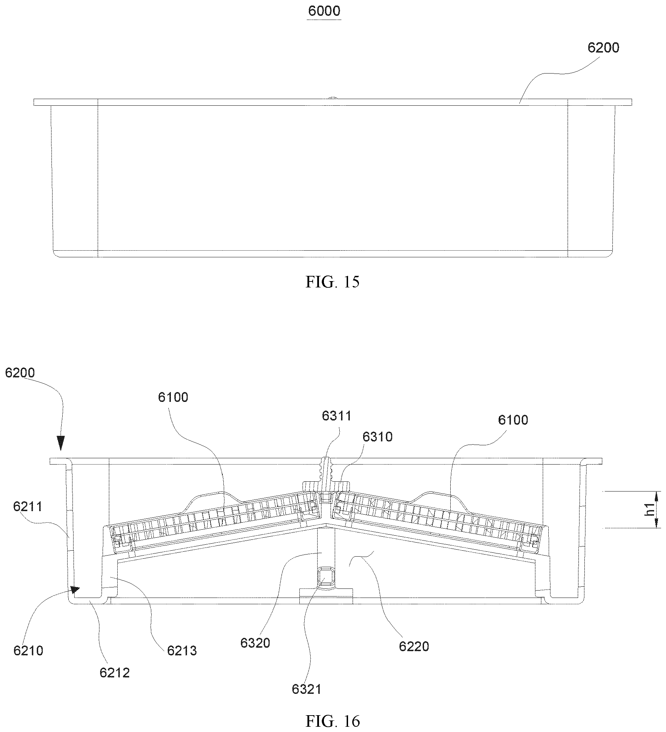

As illustrated in FIG. 15 to FIG. 18, in some embodiments, the handle 6300 is movable in a direction of gravity to be in the storage state, and is movable in a direction opposite to the direction of gravity to be in the deployed state. Therefore, it is convenient for the user to lift and lower the handle 6300.

In some embodiments, with reference to the state where the combination stove is mounted at the cabinet, the handle 6300 moves in the direction of gravity, i.e., in an up-to-down direction, and the handle 6300 moves in the direction opposite to the direction of gravity, i.e., in a down-to-up direction. Since it is necessary to mount the filtration mesh 6100 at the mounting frame 6200, the mounting frame 6200 needs to occupy a predetermined height space along a height direction (the up-down direction illustrated in the drawings) of the filtration device 6000. By designing the handle 6300 to be movable in the up-down direction, when the handle 6300 is in the storage state, the height space occupied by the mounting frame 6200 may be fully utilized, and even hidden in the mounting frame 6200.

In addition, when the user removes the filtration device 6000 from the combination stove, the user needs to stand in front of the cabinet and may switch the handle 6300 into the deployed state from the storage state only by lifting the handle 6300 from down to up, and then grip the handle 6300, which is convenient and quick and does not require excessive user's operation. When the user mounts the filtration device 6000 back into the combination stove, only the filtration device 6000 needs to be mounted in place, and the user may release the handle 6300. In this case, the handle 6300 moves from up to down under gravity, and is switched from the deployed state into the storage state. As a result, it is not necessary for the user to manually switch the handle from the deployed state to the storage state by the user. Therefore, user experience can be enhanced.

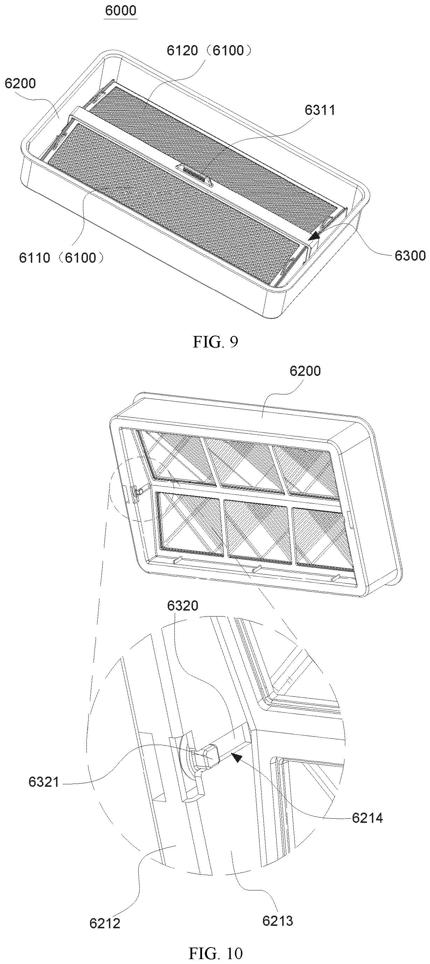

As illustrated in FIG. 9 to FIG. 14, and FIG. 16 and FIG. 18, in some embodiments, the handle 6300 has a gripping portion 6310 for the user to grip. When the handle 6300 is in the storage state, a distance between the gripping portion 6310 and the mounting frame 6300 is defined as h1. When the handle 6300 is in the deployed state, a distance between the gripping portion 6310 and the mounting frame 6200 is defined as h2, where h2 is greater than h1.

In some embodiments, the gripping portion 6310 is a portion for being gripped by the user. When the filtration device 6000 is detached by the user, the gripping portion 6310 can be gripped by the user's hand. For example, the gripping portion 6310 is of an elongated shape, and is horizontally arranged in the state where the combination stove is mounted at the cabinet. Along a height direction of the filtration device 6000, i.e., the up-down direction as illustrated, when the handle 6300 is in the storage state, a distance between the gripping portion 6310 and the mounting frame 6200 is defined as h1. For example, the distance h1 may be 0, 0.5 cm, 1 cm, 1.5 cm, or the like. When the handle 6300 is in the deployed state, a distance between the gripping portion 6310 and the mounting frame 6200 is defined as h2. For example, the distance h2 may be 2 cm, 3 cm, 5 cm, or the like. In this way, when the handle 6300 is in the deployed state, a gripping space may be generated between the handle 6300 and the mounting frame 6200. Such a gripping space can allow for an insertion of the user's hand to facilitate the user to grip the gripping portion 6310, enabling the user to lift the entire filtration device 6000 by gripping the gripping portion 6310. When the handle 6300 is in the storage state, the gripping space becomes smaller or even disappears, lowering the space occupied by the handle 6300.

The generation and disappearance of the gripping space between the handle 6300 and the mounting frame 6200 may be achieved by the movement of the handle 6300 in the up-down direction or a rotation of the handle 6300. For the movement of the handle 6300 in the up-down direction, reference may be made to the embodiments as described above, and details thereof will be omitted herein. For the rotation of the handle 6300, for example, each of two ends of the handle 6300 along a longitudinal direction of the handle 6300 is rotatably connected to the mounting frame 6200. When the user rotates the handle 6300 into a vertical state, the gripping space may be generated between the handle 6300and the mounting frame 6200. When the use releases the handle 6300, the handle 6300 may rotate under the force of gravity to rest at the mounting frame 6200. As a result, the gripping space can be reduced or eliminated.

As illustrated in FIG. 9 and FIG. 10, in some embodiments, the handle 6300 includes a slidable portion 6320 and a gripping portion 6310. The handle 6300 is slidably connected to the mounting frame 6200 through the slidable portion 6320. In this way, it is possible to allow the handle 6300 to be in the storage state or the deployed state relative to the mounting frame 6200.

In some embodiments, the handle 6300 may have an integrated structure. For example, the handle 6300 is integrally formed through injection molding to form the slidable portion 6320 and the gripping portion 6310. The handle 6300 may also have a non-integrated structure. For example, the slidable portion 6320 and the gripping portion 6310 are separately prepared, and then are fixed together by means of screwing, bonding, welding, or the like. A portion of the handle 6300 for being gripped by the user is regarded as the gripping portion 6310, and a portion of the handle 6300 for being slidably connected to the mounting frame 6200 is considered as the slidable portion 6320. For example, when the handle 6300 is integrally formed through the injection molding, the gripping portion 6310 and the slidable portion 6320 are both in an elongated shape. Further, the gripping portion 6310 is horizontally arranged, and the slidable portion 6320 is vertically arranged. As a result, a right angle is formed between the gripping portion 6310 and the slidable portion 6320.

The slidable portion 6320 is slidably connected to the mounting frame 6200. That is, the slidable portion 6320 has a predetermined movement range relative to the mounting frame 6200. Unless intentional disengagement of the slidable portion 6320 from the mounting frame 6200 is desired, the slidable portion 6320 does not become disengaged from the mounting frame 6200 within the limit of the predetermined movement range. As an example, the handle 6300 moves in the up-down direction for illustration. When the user grips the gripping portion 6310, the gripping portion 6310 can drive the slidable portion 6320 to move relative to the mounting frame 6200. When the slidable portion 6320 reaches its limit of movement, the slidable portion 6320 and the mounting frame 6200 limit each other's positions and cannot be separated from each other. Therefore, the mounting frame 6200 can be lifted by the user along with the slidable portion 6320. When the user does not grip the gripping portion 6310, the gripping portion 6310 will rest at the mounting frame 6200 due to gravity.

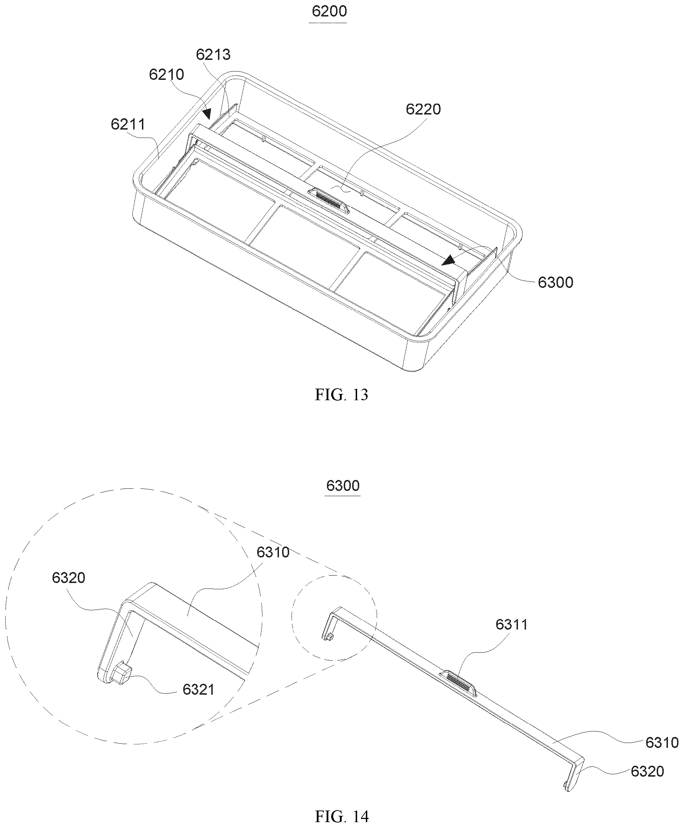

Further, as illustrated in FIG. 14, in some embodiments, in order to easily lift the filtration device 6000, the slidable portion 6320 is disposed at each of two ends of the gripping portion 6310 along a longitudinal direction of the gripping portion 6310.

In some embodiments, the gripping portion 6310 is in an elongated shape. The slidable portion 6320 is disposed at each of two ends of the gripping portion 6310 in a length direction of the gripping portion 6310. The handle 6300 generally forms an "n-shaped" structure. When the gripping portion 6310 is lifted by the user, a force is transmitted from the gripping portion 6310 to the slidable portion 6320, and then is transmitted from the slidable portion 6320 to the mounting frame 6200. Since the slidable portion 6320 is provided at each of two opposite ends of the gripping portion 6310, the force exerted on the mounting frame 6200 through the slidable portion 6320 is distributed more evenly. In this way, an extension of the gripping portion 6310 may be designed to be greater to form a greater gripping space between the gripping portion 6200 and the mounting frame 6200. Therefore, it is possible to facilitate the user's hand to access the gripping space to grip the gripping portion 6310. In addition, since more even force is generated on the mounting frame 6200 through the slidable portions 6320 at each of the two ends of the gripping portion 6310, when the handle 6300 is lifted, the handle 6300 is less likely to be deflected or deformed relative to the mounting frame 6200. As a result, it is possible to prevent the handle 6300 from being broken during the lifting.

In some embodiments, as illustrated in FIG. 10 and FIG. 14, one of the slidable portion 6320 and the mounting frame 6200 is provided with a sliding protrusion 6321, and another one of the slidable portion 6320 and the mounting frame 6200 has a sliding groove 6214. The sliding protrusion 6321 and the sliding groove 6214 are engaged with each other to allow for a slidable connection between the slidable portion 6320 and the mounting frame 6200. In this way, it is possible for the handle 6300 to be in the storage state and the deployed state relative to the mounting frame 6200.

A detailed description will be provided in which the mounting frame 6200 has the sliding groove 6214 and the handle 6300 is provided with the sliding protrusion 6321. The sliding groove 6214 extends in the up-down direction and has a predetermined height. When the handle 6300 is mounted onto the mounting frame 6200, a force is applied to the handle 6300 to allow for a predetermined elastic deformation of the handle 6300. As a result, the sliding protrusion 6321 is aligned with and arranged into the sliding groove 6214. In addition, after the handle 6300 restores its shape, the sliding protrusion 6321 is engaged within the sliding groove 6214 and is unable to be disengaged from the sliding groove. During the switching of the handle 6300 from the storage state into the deployed state, the sliding protrusion 6321 moves along the sliding groove 6214 until the sliding protrusion 6321 is engaged with a top end of the sliding groove 6214. In this way, the mounting frame 6200 can be disengaged from the combination stove as the handle 6300 is lifted. During the switching of the handle 6300 from the deployed state into the storage state, the sliding protrusion 6321 moves along the sliding groove 6214 towards a bottom end of the sliding groove 6214 until the sliding protrusion 6321 abuts against the bottom end of the sliding groove 6214 or until the gripping portion 6310 rests at the mounting frame 6200. Through mutual engagement between the sliding groove 6214 and the sliding protrusion 6321, a sliding fit between the handle 6300 and the mounting frame 6200 can be achieved. Therefore, a simple, stable, and reliable structure can be provided.

Further, in order to further reduce a space occupied by the gripping portion 6310, and more convenient gripping by the user, as illustrated in FIG. 15 and FIG. 16, in some embodiments, the gripping portion 6310 is lower than an upper surface of the mounting frame 6200 when the handle 6300 is in the storage state.

In some embodiments, along the height direction of the filtration device 6000, i.e., the up-down direction as illustrated, a horizontal plane is defined. The horizontal plane moves from up to down until the horizontal plane is just brought into contact with the mounting frame 6200. At this time, a corresponding part of the mounting frame 6200, even if the corresponding part is formed as a tip, is regarded as an upper surface. Since the filtration mesh 6100 needs to be mounted at the mounting frame 6200, the mounting frame 6200 has a predetermined height in the up-down direction. Therefore, the handle 6300 is positioned to be lower than the upper surface of the mounting frame 6200 when the handle 6300 is in the storage state. In this way, it is possible to hide the handle 6300 within the mounting frame 6200. When the grille 5000 is disposed above the filtration device 6000, the grille 5000 may be attached with the filtration device 6000 as closely as possible, or even the grille 5000 is partially arranged into the mounting frame 6200. Therefore, it is possible to reduce a space of the combination stove as much as possible and realize a lighter and thinner design of the combination stove.

In some embodiments, as illustrated in FIG. 15 and FIG. 16, the slidable portion 6320 is higher than a lower surface of the mounting frame 6200 when the handle 6300 is in the storage state.

In some embodiments, along the height direction of the filtration device 6000, i.e., the up-down direction as illustrated, a horizontal plane is defined. The horizontal plane moves from down to up until the horizontal plane is just brought into contact with the mounting frame 6200. A corresponding part of the mounting frame 6200, even if the corresponding part is formed as a tip, is regarded as a lower surface. When the filtration device 6000 is mounted in the combination stove, the filtration device 6000 may be arranged within the body 1000. Since the slidable portion 6320 is higher than the lower surface of the mounting frame 6200 when the handle 6300 is in the storage state, the handle 6300 can be completely hidden within the mounting frame 6200 when the handle 6300 is in the storage state, i.e., the handle 6300 is not exposed to the mounting frame 6200 in the up-down direction. Therefore, a space occupied by the mounting frame 6200 in the up-down direction can be maximally utilized. In addition, a lowering of the handle 6300 may interfere with other components of the combination stove.

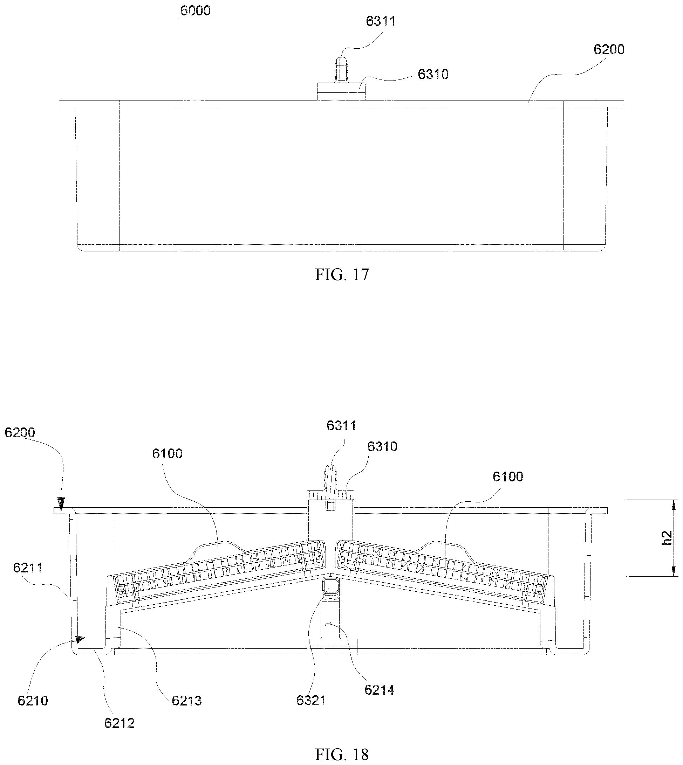

Further, as illustrated in FIGS. 17 and 18, in some embodiments, the gripping portion 6310 is higher than the upper surface of the mounting frame 6200 when the handle 6300 is in the deployed state. Along the height direction of the filtration device 6000, i.e., the up-down direction as illustrated, the gripping portion 6310 protrudes from the mounting frame 6200. In this way, a space between the gripping portion 6310 and the mounting frame 6200 can be increased as much as possible, facilitating the user to grip the gripping portion 6310.

As illustrated in FIG. 14, in some embodiments, the gripping portion 6310 is provided with a lift portion 6311. When the handle 6300 is in the storage state, the gripping portion 6310 is attached with the mounting frame 6200 as much as possible. To facilitate the user in lifting the gripping portion 6310, the lift portion 6311 is provided for the gripping portion 6310. The user can grip the lift portion 6311 to lift he lift portion 6311 upwards by a predetermined distance to generate the gripping space between the gripping portion 6310 and the mounting frame 6200, allowing the user's hand to access the gripping space.

As illustrated in FIGS. 13 and 16, in some embodiments, the mounting frame 6200 has a first vent hole 6220 covered with the filtration mesh 6100. The gripping portion 6310 extends across the first vent hole 6220.

In some embodiments, when the fan 3000 operates, the air may be driven by the fan 3000 to flow through the filtration device 6000. To further avoid obstruction of the mounting frame 6200 to the air, the first vent hole 6220 is formed at the mounting frame 6200. After passing through the filtration mesh 6100, the air may pass through the first vent hole 6220 into the fan 3000. In this way, flow resistance of the air can be reduced without changing a flow path of the air. Meanwhile, an internal structure of the combination stove becomes simple, and design complexity is lowered.

The filtration mesh 6100 is mounted at a part of the mounting frame 6200 surrounding the first vent hole 6220. In this way, the mounting frame 6200 can better support the filtration mesh 6100. Therefore, the first vent hole 6220 can be covered with the filtration mesh 6100 to avoiding air leakage.

The gripping portion 6310 extends across the first vent hole 6220. When the gripping portion 6310 is lifted by the user, the force generated by the gripping portion 6310 on the mounting frame 6200 is distributed more evenly. Therefore, the filtration device 6000 can be disassembled more smoothly.

Further, as illustrated in FIG. 16, in some embodiments, the mounting frame 6200 has an inner wall 6213 and an outer wall 6211. The first vent hole 6220 is enclosed by the inner wall 6213. The handle 6300 is movably connected to the inner wall 6213. The outer wall 6211 surrounds the inner wall 6213 to form a liquid collection groove 6210 between the inner wall 6213 and the outer wall 6211. The filtration mesh 6100 is arranged obliquely to guide a filtered object into the liquid collection groove 6210.

In some embodiments, the filtered object may be the condensed water or an oil-water mixture (using the condensed water as an example for detailed explanation). When the fan 3000 operates, the air passes through the filtration mesh 6100. In this way, the water vapor in the air is condensed at the filtration mesh 6100 into water droplets. The water droplets are separated from the filtration mesh 6100 and fall into the liquid collection groove 6210 under the action of the airflow and gravity. The user can grip the handle 6300 to disassemble the filtration device 6000, and remove the filtration device 6000 through the opening 2100. Then, the condensate water is emptied out of the liquid collection groove 6210, and a thorough cleaning is performed on the filtration device 6000. After the filtration device 6000 is cleaned, the gripping portion 6310 can be gripped to place the filtration device 6000 back on the air inlet path through the opening 2100. The liquid collection groove 6210 may also have a water outlet to directly discharge the condensed water into a liquid collection cup of the combination stove.

The handle 6300 is movably connected to the inner wall 6213. For example, the handle 6300 is slidably fitted with the inner wall 6213 through the slidable portion 6320, to prevent the arrangement of the handle 6300 at the outer wall 6211 from affecting other components. That is, the handle 6300 is entirely hidden within the mounting frame 6200.

Generally, the filtration device 6000 is disposed above the air inlet 3111 of the fan 3000. When the filtration mesh 6100 is horizontally arranged, if it is necessary for the liquid collection groove 6210 to collect the condensate water, the liquid collection groove 6210 needs to be arranged directly below the filtration mesh 6100 and located above the air inlet 3111, and has a dimension compatible with the filtration mesh 6100. In this way, the air flow is blocked by the liquid collection groove 6210. When the air needs to enter the air inlet 3111, it is necessary to avoid the liquid collection groove 6210. Therefore, it is possible to increase the air flow resistance and wind noise, and reduce the suction force of the fan 3000.

Therefore, the filtration mesh 6100 is arranged obliquely to address the above problems. It can be understood that, for an oblique arrangement, reference is made to the state where the combination stove is mounted at the cabinet. In this state, the filtration mesh 6100 is arranged obliquely relative to the horizontal plane. In addition, an arrangement of the filtration device 6000 and an arrangement of the fan 3000 mentioned above are also taken the state where the combination stove is mounted at the cabinet as a reference. By obliquely arranging the filtration mesh 6100, the condensed water condensed at the filtration mesh 6100 flows along the filtration mesh 6100 in a direction from a top of the filtration mesh 6100 to a bottom of the filtration mesh 6100. As a result, the liquid collection groove 6210 only needs to be arranged at a corresponding position of the bottom of the filtration mesh 6100 to collect the condensed water, rather than being sized to match the filtration mesh 6100 and arranged directly below the filtration mesh 6100 to collect the condensed water. In this way, most of the air will not be blocked by the liquid collection groove 6210. Such an arrangement of the filtration mesh 6100 can allow the liquid collection groove 6210 to collect the condensed water without significantly blocking the flow of the air.

The liquid collection groove 6210 is of an annular shape. That is, the liquid collection groove 6210 is arranged around the filtration mesh 6100. In addition, a plurality of filtration meshes 6100 may be provided. Therefore, the condensed water may be collected in various directions, to improve condensation efficiency of the water vapor. In addition, since the liquid collection groove 6210 is in annular communication, the condensed water collected at various positions may be gathered, which is convenient for cleaning.

As illustrated in FIG. 16, the bottom of the filtration mesh 6100 is located above the bottom of the liquid collection groove 6210. Therefore, it is possible to prevent accumulation of liquid from occurring at the filtration mesh 6100, which may result in difficult cleaning of the filtration mesh 6100.

In a case where the bottom of the filtration mesh 6100 is connected to the bottom of the liquid collection groove 6210, when the condensate water at the filtration mesh 6100 flows to the liquid collection groove 6210, the condensate water will soak the bottom of the filtration mesh 6100, and dirt is gathered at a connection between the filtration mesh 6100 and a water surface of the condensate water. That is, the dirt is easily accumulated at the connection between the filtration mesh 6100 and the water surface of the condensate water, and the connection becomes difficult to be cleaned. In addition, when the condensed water reaches a predetermined amount, the filtration mesh 6100 is partially covered by the condensed water, to reduce a condensation area of the filtration mesh 6100, which may result in a poor condensation effect of the filtration mesh 6100. Therefore, by positioning the bottom of the filtration mesh 6100 above the bottom of the liquid collection groove 6210, i.e., by designing the filtration mesh 6100 and the liquid collection groove 6210 without contact with each other, the condensate water can flow from the filtration mesh 6100 downwards into the liquid collection groove 6210. As a result, it is possible to prevent the condensation water from soaking the filtration mesh 6100, which may reduce the condensation area of the filtration mesh 6100. Therefore, continuous and efficient condensation of the water vapor in the air can be achieved.

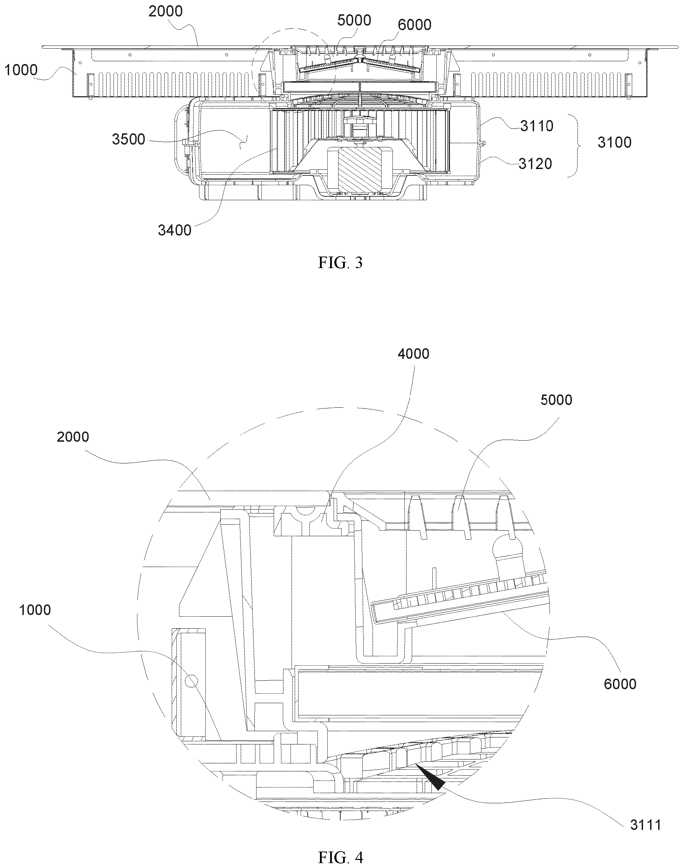

As illustrated in FIG. 3 and FIG. 14, in some embodiments, the mounting frame 6200 is provided with two filtration meshes 6100. In addition, the mounting frame 6200 may be provided with three, four, or more filtration meshes 6100. The two filtration meshes 6100 constitute an inverted V-shaped structure. Therefore, a filtration area can be increased in a limited transverse space, and the filtration efficiency can be improved.

In some embodiments, the two filtration meshes 6100 include a second filtration mesh 6120 and a first filtration mesh 6110. The second filtration mesh 6120 is arranged adjacent to the first filtration mesh 6110 to form the inverted V-shaped structure. The term "adjacent to" herein means that the second filtration mesh 6120 and the first filtration mesh 6110 are close to each other. For example, the second filtration mesh 6120 may be attached with the first filtration mesh 6110, or spaced apart from the first filtration mesh 6110 by a predetermined gap. The second filtration mesh 6120 and the first filtration mesh 6110 cooperate with each other and arranged in parallel to each other in a left-and-right direction to form the inverted V-shaped structure. Therefore, a transverse occupied space of the combination stove can be reduced, and the filtration area can be increased. In addition, an inclination direction of the first filtration mesh 6110 is different from an inclination direction of the second filtration mesh 6120, which can lower a vertical occupied space while ensuring the same filtration area.

The first filtration mesh 6110 and the second filtration mesh 6120 are of the inverted V-shaped structure. In this way, the first filtration mesh 6110 is inclined towards the left cooking region 2210, and the second filtration mesh 6120 is inclined towards the right cooking region 2220. In general, the combination stove is provided with the grille 5000. The the grille 5000 is configured to guide air in the left cooking region 2210 to flow towards the first filtration mesh 6110 in a flow direction substantially perpendicular to the first filtration mesh 6110. In this way, filtration efficiency of the air from the left cooking region 2210 can be effectively improved, and the flow resistance can be reduced. In addition, the grille 5000 may also guide air in the right cooking region 2220 to flow towards the second filtration mesh 6120 in a flow direction substantially perpendicular to the second filtration mesh 6120. In this way, filtration efficiency of the air from the right cooking region 2220 can be improved, and the flow resistance can be reduced.

The gripping portion 6310 is disposed between the first filtration mesh 6110 and the second filtration mesh 6120. The air flow mainly passes through the first filtration mesh 6110 and the second filtration mesh 6120. Therefore, the arrangement of the gripping portion 6310 does not generate too large obstruction to the air flow.

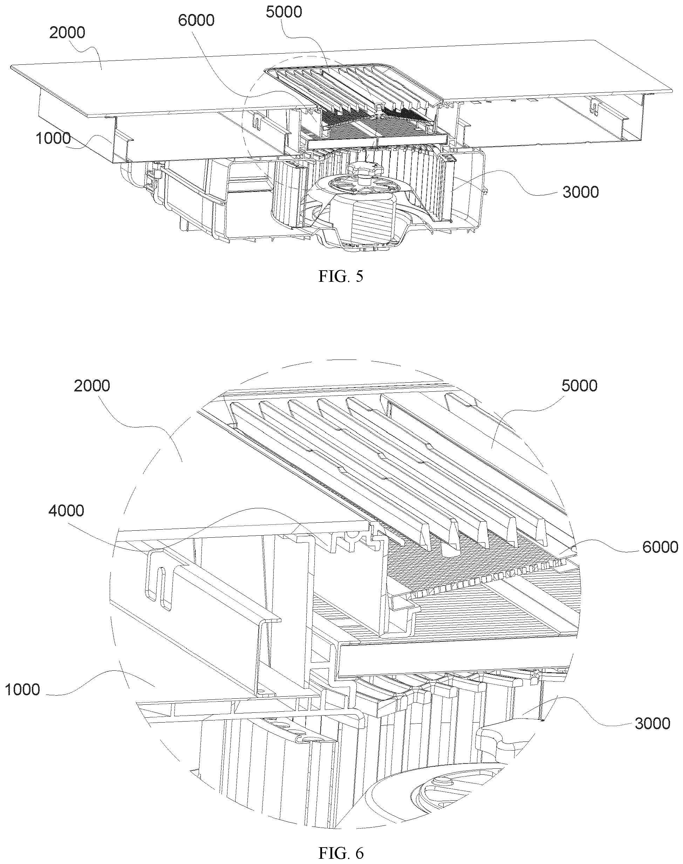

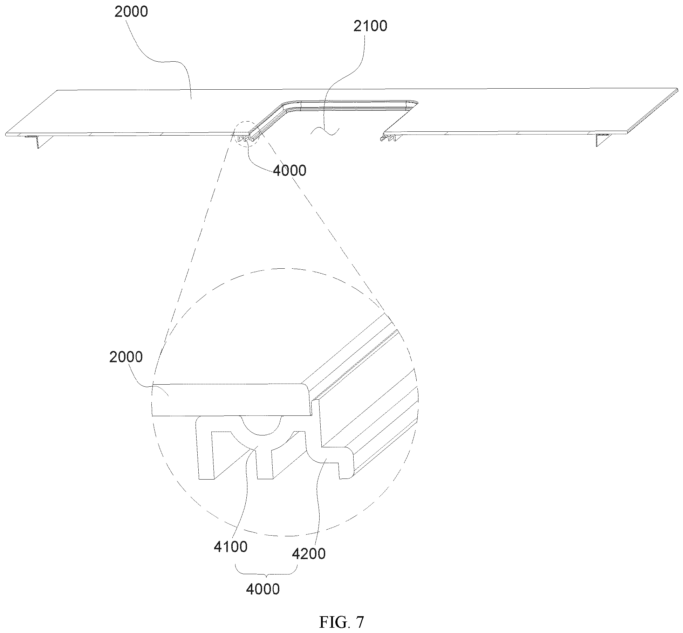

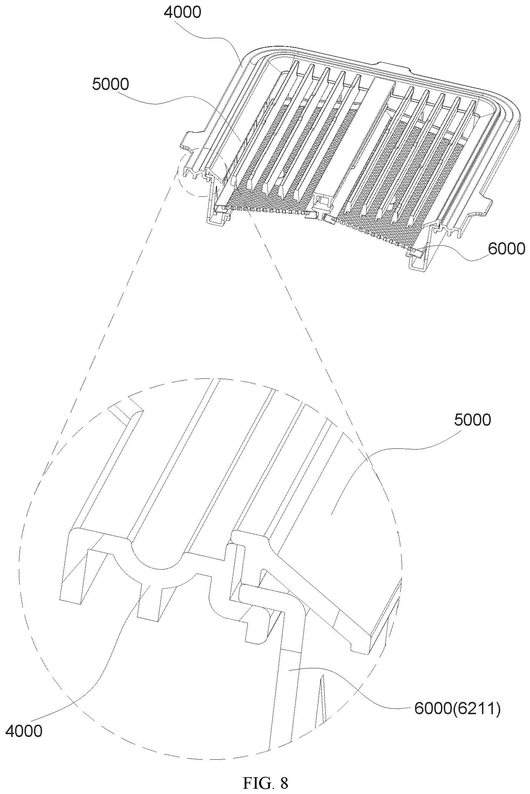

As illustrated in FIG. 5 to FIG. 8, in some embodiments, the combination stove further includes a connector 4000. The connector 4000 is disposed at a lower surface of the cover plate 2000 and exposed at the opening 2100. The filtration device 6000 is disposed at the opening 2100 and is supported on the connector 4000 to allow for a detachable connection of the filtration device 6000.

The filtration device 6000 is disposed at the opening 2100. That is, the filtration device 6000 may substantially cover the opening 2100 during mounting, allowing the air to pass through the filtration device 6000. The connector 4000 is disposed at the cover plate 2000 and exposed at the opening 2100. When the filtration device 6000 is disposed at the opening 2100, the filtration device 6000 is supported on the connector 4000. In this way, it is only necessary to ensure an accurate positioning of the connectors 4000 at the cover plate 2000, and a positional relationship of the filtration device 6000 is not affected by the body 1000. When the filtration device 6000 is disposed at the opening 2100 and is supported on the connector 4000, a mutual matching between the filtration device 6000 and the air inlet path can be ensured. In addition, a gap is not easily formed between the filtration device 6000 and the opening 2100, and thus the air leakage can be avoided.

In a case where the connector 4000 is disposed at the body 100, rather than being disposed at the cover plate 2000, when the cover plate 2000 and the body 1000 are mounted, an accurate positioning between the cover plate 2000 and the body 1000 needs to be ensured to avoid a deviation of the connector 4000 from the opening 2100 of the cover plate 2000, which may result in a position deviation of the mounting of the filtration device 6000. It seems that this mounting method significantly increases manufacturing difficulty.

In addition, the filtration device 6000 is supported on the connector 4000. For example, the filtration device 6000 can be supported on the connector 4000 directly by means of gravity. In this way, it is possible for the filtration device 6000 to be detachably connected to the connector 4000. Since the filtration device 6000 is supported on the connector 4000 by means of gravity, when the air flows, the force exerted on the filtration device 6000 by the air tightly presses the filtration device 6000 against the connector 4000. As a result, the filtration device 6000 does not shake to generate noise during the flowing of the air. The user inserts the filtration device 6000 into the opening 2100 from the outside of the cover plate 2000 by gripping the gripping portion 6310, and the filtration device 6000 can be supported on the connector 4000 under the action of gravity. Similarly, during the disassembly, the user only lifts the filtration device 6000 through the opening 2100 by gripping the gripping portion 6310, which facilitates the disassembly and assembly of the user and enhances the use experience.

It can be understood that the connector 4000 being exposed at the opening 2100 indicates that when the combination stove is mounted at the cabinet, the connector 4000 is partially visible in a region enclosed by the opening 2100a when observing from directly above the combination stove.

The connector 4000 is disposed at the lower surface of the cover plate 2000 to be hidden, without protruding from the upper surface of the cover plate 2000. In this way, aesthetics of the cover plate 2000 will not be destroyed. In addition, since the lower surface of the cover plate 2000 can provide enough space for fixing the connector 4000, more connection means may be employed between the connector 4000 and the lower surface of the cover plate 2000. Therefore, it is easier to fix the connector 4000 and the lower surface of the cover plate 2000, as long as ensure that the connector 4000 is partially exposed at the opening 2100 when the connector 4000 is fixed at the lower surface of the cover plate 2000. Therefore, when the filtration device 6000 is inserted into the opening 2100 from the outside of the cover plate 2000 to be arranged into the body 1000, the connector 4000 can support the filtration device 6000.

The connector 4000 may be integrally formed by injection molding of plastic, and may be formed with a first connection portion 4100 and a second connection portion 4200. The connector 4000 is made of plastic material that has advantages such as being lightweight and having great flexibility. When the combination stove is mounted at the cabinet and when observed from up to down, a part of the combination stove hidden at the cover plate 2000 may be regarded as the first connection portion 4100, and a part of the combination stove exposed at the opening 2100 may be regarded as the second connection portion 4200.

The connector 4000 may be a separate component fixed at the lower surface of the cover plate 2000 in an additional connection manner. There are various available connection methods. For example, a connection between the first connection portion 4100 and the lower surface of the cover plate 2000 may be achieved by bonding, welding, or in a threaded manner. The second connection portion 4200 is configured to support the filtration device 6000.

As illustrated in FIG. 14, the mounting frame 6200 has an inner wall 6213, an outer wall 6211, and a bottom wall 6212. The bottom wall 6212 is located between the inner wall 6213 and the outer wall 6211. The liquid collection groove 6210 is enclosed by the outer wall 6211, the bottom wall 6212, and the inner wall 6213. When the filtration device 6000 is mounted at the opening 2100, the outer wall 6211 of the mounting frame 6200 is supported on the connector 4000 (on the second connection portion 4200). In this way, the positioning of the filtration device 6000 can be realized. By providing the mounting frame 6200 with the inner wall 6213 and the outer wall 6211, the collection of the condensed water can be realized, and combination of the handle 6300 and the mounting frame 6200 can also be realized. In addition, the filtration device 6000 can be positioned at the opening 2100.

Further, as illustrated in FIG. 16, in some embodiments, the outer wall 6211 of the mounting frame 6200 is higher than the inner wall 6213 of the mounting frame 6200, which not only facilitates the fixing of the bottom of the filtration mesh 6100, but also enables the entire mounting frame 6200 to be arranged in the body 1000, i.e., most of the filtration device 6000 is arranged in the body 1000. As a result, the thickness of the combination stove can be reduced. Therefore, the combination stove can be made thinner.

In some embodiments, the bottom of the filtration mesh 6100 is supported at the inner wall 6213 of the mounting frame 6200 and abuts against the outer wall 6211 of the mounting frame 6200. Therefore, the fixing of the bottom of the filtration mesh 6100 is realized. Further, this fixing method can position the bottom of the filtration mesh 6100 above the bottom of the liquid collection groove 6210 without being in contact with the bottom of the liquid collection groove 6210. This allows the condensation water on the filtration mesh 6100 to easily drop into the liquid collection groove 6210. Therefore, by designing the outer wall 6211 to be higher, most of the structure of the mounting frame 6200 can be arranged into the body 1000. As a result, the thickness of the combination stove can be reduced, and the mounting of other components is facilitated.

The foregoing is merely a preferred embodiment of the present disclosure, and is not therefore intended to limit the scope of the present disclosure. Any equivalent structural modification made by using the specification and drawings of the present disclosure, or directly/indirectly applied in other related technical fields, are all fall within the scope of the of the present disclosure under the concept of the present disclosure.

## Claims

1. A filtration device, comprising:
a mounting frame provided with a filtration mesh; and
a handle movably connected to the mounting frame and having a storage state and a deployed state.

2. The filtration device according to claim 1, wherein the handle is movable in a direction of gravity to be in the storage state, and is movable in a direction opposite to the direction of gravity to be in the deployed state.

3. The filtration device according to claim 1, wherein the handle comprises a gripping portion, wherein:
when the handle is in the storage state, a distance between the gripping portion and the mounting frame along a height direction of the filtration device is defined as h1; and
when the handle is in the deployed state, a distance between the gripping portion and the mounting frame along the height direction of the filtration device is defined as h2, where h2 is greater than h1.

4. The filtration device according to claim 1, wherein the handle comprises a gripping portion and a slidable portion, the slidable portion being slidably connected to the mounting frame to allow the handle to be in the storage state or the deployed state.

5. The filtration device according to claim 4, wherein the slidable portion is disposed at each of two ends of the gripping portion along a longitudinal direction of the gripping portion.

6. The filtration device according to claim 4, wherein one of the mounting frame and the slidable portion has a sliding groove, and another one of the mounting frame and the slidable portion has a sliding protrusion, the sliding protrusion being arranged into the sliding groove to allow the slidable portion to be slidably connected to the mounting frame.

7. The filtration device according to claim 4, wherein along a height direction of the filtration device:
the gripping portion is lower than an upper surface of the mounting frame when the handle is in the storage state, and/or
the slidable portion is higher than a lower surface of the mounting frame when the handle is in the storage state, and/or
the gripping portion is higher than the upper surface of the mounting frame when the handle is in the deployed state.

8. The filtration device according to claim 4, wherein the gripping portion is provided with a lift portion.

9. The filtration device according to claim 1, wherein the mounting frame has a first vent hole covered with the filtration mesh, the handle extending across the first vent hole.

10. The filtration device according to claim 9, wherein the mounting frame is provided with two filtration meshes comprising a first filtration mesh and a second filtration mesh, the handle being located between the first filtration mesh and the second filtration mesh.

11. The filtration device according to claim 9, wherein the mounting frame has an inner wall and an outer wall, the first vent hole being enclosed by the inner wall, the handle being movably connected to the inner wall, the outer wall surrounding the inner wall to form a liquid collection groove between the inner wall and the outer wall, and the filtration mesh being arranged obliquely to guide a filtered object to the liquid collection groove.

12. The filtration device according to claim 11, wherein the filtration device is applied in a combination stove comprising a cover plate and a connector, the cover plate having an opening, the connector being disposed at a lower surface of the cover plate and exposed at the opening, the mounting frame being disposed at the opening, and the outer wall being supported on the connector to allow for a detachable arrangement of the mounting frame.

13. A combination stove, comprising the filtration device according to any one of claims 1 to 12.
